# EUROPEAN PATENT APPLICATION

(11) **EP 4 280 705 A1**
(43) Date of publication of application: **22.11.2023**
(21) Application number: 22738919.4
(22) Date of filing: 06.01.2022
(51) Int. Cl.: H04W 52/02

(54) **METHOD FOR SENDING DCI, METHOD FOR RECEIVING DCI, APPARATUS, NETWORK SIDE DEVICE, AND TERMINAL**

(30) Priority: 18.01.2021 CN 202110065058
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); SU, Yuwan, Beijing 100085 (CN); CHENG, Fangchen, Beijing 100085 (CN)
(74) Representative: dompatent von Kreisler Selting Werner - Partnerschaft von Patent- und Rechtsanwälten mbB
(86) International application number: PCT/CN2022/070510
(87) International publication number: WO 2022/152038

(57) **Abstract**

A sending and receiving method, a sending and receiving apparatus, a network side device, and a terminal are provided in the present disclosure, wherein the method includes: sending a first DCI by a network side device, wherein the first DCI includes at least one information field, wherein the at least one information field is configured to carry wake-up information and/or paging advance indication information, wherein the wake-up information is configured to indicate whether a terminal needs to be woken up; the paging advance indication information is configured to indicate a state of related information to be monitored after the terminal is woken up.

## Description

### CROSS REFERENCE OF RELATED APPLICATION

The present application claims a priority of Chinese patent application No. 202110065058.4 filed on January 18, 2021, which is incorporated herein by reference in its entirety.

### TECHNICAL FIELD

The present disclosure relates to the field of communications technology, and in particular to a DCI sending and receiving method, a DCI sending and receiving apparatus, a network side device, and a terminal.

### BACKGROUND

In the terminal energy-saving scenario, an energy-saving solution for radio resource control (Radio Resource Control, RRC) idle state is proposed, and the paging indication signal (Paging early indication, PEI) is supported in the RRC idle state as an indication of whether to monitor a paging message. The terminal monitors the PEI before monitoring the paging message, thereby reducing the monitoring of invalid paging messages of the terminal and further reducing the power consumption of the terminal. Specifically, before receiving the paging message, the terminal first receives the PEI, and if the PEI indicates that the terminal needs to receive the subsequent paging message, the terminal continues to receive the paging message; otherwise, the terminal can enter low power consumption or sleep state, thereby reducing the power consumption of the terminal.

Secondly, in the RRC connection state, the wake up signal (Wake Up Signal, WUS) is supported to indicate whether the terminal needs to be woken up to monitor the physical downlink control channel (Physical Downlink Control Channel, PDCCH) during the subsequent discontinuous reception (Discontinuous Reception, DRX) activation period. If the WUS signal indicates that PDCCH needs to be monitored during the subsequent DRX activation period, the terminal wakes up the receiver to perform the monitoring of PDCCH, otherwise, the terminal can enter a low power consumption or sleep state and not monitor PDCCH during the subsequent DRX period.

In the related art, for the PEI in the RRC idle state, there is no specific design scheme for whether to use the downlink control information (downlink control information, DCI) to carry the PEI, and how to use the bit field of the DCI to carry the PEI.

### SUMMARY

Embodiments of the present disclosure provide a DCI sending and receiving method, a DCI sending and receiving apparatus, a network side device and a terminal, so as to solve the problem on transmission and bearer of a paging indication signal of a terminal in an RRC idle state in the related art.

In order to solve the above-mentioned problem, the present disclosure provides a method for sending downlink control information DCI, the method including:
sending a first DCI by a network side device, wherein the first DCI includes at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

The at least one information field includes: a first information filed and a second information field, where
the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information;
or,
the first information field is configured to carry wake-up information of N1 terminal groups, and the second information field is configured to carry terminal group-level paging advance indication information corresponding to each terminal group in the first information field; N1 is an integer greater than or equal to 1;
or,
the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1;
or,
the first information field is configured to carry cell-level wake-up information and wake-up information of N3 terminal groups, and the second information field is configured to carry a plurality of groups of paging advance indication information, and each of groups of paging advance indication information includes: a state of information to be monitored after the terminal is woken up corresponding to cell level and N3 terminal groups; N3 is an integer greater than or equal to 1.

The at least one information field includes: N4 third information fields; where
the third information field is configured to carry wake-up information of a terminal group and/or terminal group-level paging advance indication information of the terminal group; N4 is an integer greater than or equal to 1.

The cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

The terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

The target reference signal includes at least one of the following:
tracking reference signal TRS;
channel state indicator-reference signal CSI-RS;
synchronization signal block SSB.

An embodiment of the present disclosure also provides a method for receiving downlink control information DCI, which includes:
receiving, by a terminal, a first DCI, wherein the first DCI includes at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

The at least one information field includes: a first information filed and a second information field, where
the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information;
or,
the first information field is configured to carry wake-up information of N1 terminal groups, and the second information field is configured to carry terminal group-level paging advance indication information corresponding to each terminal group in the first information field; N1 is an integer greater than or equal to 1;
or,
the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1;
or,
the first information field is configured to carry cell-level wake-up information and wake-up information of N3 terminal groups, and the second information field is configured to carry a plurality of groups of paging advance indication information, and each of groups of paging advance indication information includes: a state of information to be monitored after the terminal is woken up corresponding to cell level and N3 terminal groups; N3 is an integer greater than or equal to 1.

The at least one information field includes: N4 third information fields; where
the third information field is configured to carry wake-up information of a terminal group and/or terminal group-level paging advance indication information of the terminal group; N4 is an integer greater than or equal to 1.

The cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

The terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

The target reference signal includes at least one of the following:
tracking reference signal TRS;
channel state indicator-reference signal CSI-RS;
synchronization signal block SSB.

An embodiment of the present disclosure also provides a method for sending downlink control information DCI, wherein the method includes:
sending a second DCI by a network side device, wherein the second DCI is configured to indicate control information of a paging message, and reserved bit field in the second DCI is configured to indicate configuration information of a first signal;
the configuration information of the first signal includes at least one of the following:
   information of dedicated system information block SIB of the first signal;
   an indication of whether the dedicated SIB of the first signal is updated.

The first signal includes at least one of the following:
tracking reference signal TRS;
channel state indicator-reference signal CSI-RS;
synchronization signal block SSB;
paging advance indication signal.

An embodiment of the present disclosure also provides a method for receiving downlink control information DCI, which includes:
receiving, by the terminal, a second DCI, wherein the second DCI is configured to indicate control information of a paging message, and reserved bit field in the second DCI is configured to indicate configuration information of a first signal;
the configuration information of the first signal includes at least one of the following:
   information of dedicated system information block SIB of the first signal;
   an indication of whether the dedicated SIB of the first signal is updated.

The first signal includes at least one of the following:
tracking reference signal TRS;
channel state indicator-reference signal CSI-RS;
synchronization signal block SSB;
paging advance indication signal.

An embodiment of the present disclosure also provides a network side device, including a memory, a transceiver, and a processor; wherein the memory is configured to store computer program; the transceiver is configured to send and receive data under control of the processor; the processor is configured to read the computer program in the memory and perform the following operations of:
sending a first DCI, wherein the first DCI includes at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

An embodiment of the present disclosure also provides a sending apparatus for downlink control information DCI, applied to a network side device, which includes:
a first sending unit, configured to send a first DCI, wherein the first DCI includes at least one information field, wherein the at least one information field is configured to carry wake-up information and/or paging advance indication information;
wherein the wake-up information is configured to indicate whether a terminal needs to be woken up; the paging advance indication information is configured to indicate a state of related information to be monitored after the terminal is woken up.

The at least one information field includes: a first information filed and a second information field, where
the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information;
or,
the first information field is configured to carry wake-up information of N1 terminal groups, and the second information field is configured to carry terminal group-level paging advance indication information corresponding to each terminal group in the first information field; N1 is an integer greater than or equal to 1;
or,
the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1;
or,
the first information field is configured to carry cell-level wake-up information and wake-up information of N3 terminal groups, and the second information field is configured to carry a plurality of groups of paging advance indication information, and each of groups of paging advance indication information includes: a state of information to be monitored after the terminal is woken up corresponding to cell level and N3 terminal groups; N3 is an integer greater than or equal to 1.

The at least one information field includes: N4 third information fields; where
the third information field is configured to carry wake-up information of a terminal group and/or terminal group-level paging advance indication information of the terminal group; N4 is an integer greater than or equal to 1.

The cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

The terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

The target reference signal includes at least one of the following:
tracking reference signal TRS;
channel state indicator-reference signal CSI-RS;
synchronization signal block SSB.

An embodiment of the present disclosure also provides a terminal, including a memory, a transceiver, and a processor; wherein the memory is configured to store computer program; the transceiver is configured to send and receive data under control of the processor; the processor is configured to read the computer program in the memory and perform the following operations of:
receiving a first DCI, wherein the first DCI includes at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

An embodiment of present disclosure also provides a receiving apparatus for downlink control information DCI, applied to a terminal, which includes:
a first receiving unit, configured to receive a first DCI, wherein the first DCI includes at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

The at least one information field includes: a first information filed and a second information field, where
the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information;
or,
the first information field is configured to carry wake-up information of N1 terminal groups, and the second information field is configured to carry terminal group-level paging advance indication information corresponding to each terminal group in the first information field; N1 is an integer greater than or equal to 1;
or,
the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1;
or,
the first information field is configured to carry cell-level wake-up information and wake-up information of N3 terminal groups, and the second information field is configured to carry a plurality of groups of paging advance indication information, and each of groups of paging advance indication information includes: a state of information to be monitored after the terminal is woken up corresponding to cell level and N3 terminal groups; N3 is an integer greater than or equal to 1.

The at least one information field includes: N4 third information fields; where
the third information field is configured to carry wake-up information of a terminal group and/or terminal group-level paging advance indication information of the terminal group; N4 is an integer greater than or equal to 1.

The cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

The terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

The target reference signal includes at least one of the following:
tracking reference signal TRS;
channel state indicator-reference signal CSI-RS;
synchronization signal block SSB.

An embodiment of the present disclosure a network side device, including a memory, a transceiver, and a processor; wherein the memory is configured to store computer program; the transceiver is configured to send and receive data under control of the processor; the processor is configured to read the computer program in the memory and perform the following operations of:
sending a second DCI, wherein the second DCI is configured to indicate control information of a paging message, and reserved bit field in the second DCI is configured to indicate configuration information of a first signal;
the configuration information of the first signal includes at least one of the following:
   information of dedicated system information block SIB of the first signal;
   an indication of whether the dedicated SIB of the first signal is updated.

An embodiment of the present disclosure also provides a sending apparatus for downlink control information DCI, applied to a network side device, which includes:
a second sending unit, configured to send a second DCI, wherein the second DCI is configured to indicate control information of a paging message, and reserved bit field in the second DCI is configured to indicate configuration information of a first signal;
the configuration information of the first signal includes at least one of the following:
   information of dedicated system information block SIB of the first signal;
   an indication of whether the dedicated SIB of the first signal is updated.

The first signal includes at least one of the following:
tracking reference signal TRS;
channel state indicator-reference signal CSI-RS;
synchronization signal block SSB;
paging advance indication signal.

An embodiment of the present disclosure also provides a terminal, including a memory, a transceiver, and a processor; wherein the memory is configured to store computer program; the transceiver is configured to send and receive data under control of the processor; the processor is configured to read the computer program in the memory and perform the following operations of:
receiving a second DCI, wherein the second DCI is configured to indicate control information of a paging message, and reserved bit field in the second DCI is configured to indicate configuration information of a first signal;
the configuration information of the first signal includes at least one of the following:
information of dedicated system information block SIB of the first signal;
an indication of whether the dedicated SIB of the first signal is updated.

An embodiment of the present disclosure also provides a receiving apparatus for downlink control information DCI, applied to a terminal, including:
a second receiving unit, configured to receive a second DCI, wherein the second DCI is configured to indicate control information of a paging message, and reserved bit field in the second DCI is configured to indicate configuration information of a first signal;
the configuration information of the first signal includes at least one of the following:
   information of dedicated system information block SIB of the first signal;
   an indication of whether the dedicated SIB of the first signal is updated.

The first signal includes at least one of the following:
tracking reference signal TRS;
channel state indicator-reference signal CSI-RS;
synchronization signal block SSB;
paging advance indication signal.

An embodiment of the present disclosure also provides a processor-readable storage medium, wherein the processor-readable storage medium stores computer program, and the computer program is configured to cause the processor to execute the above-mentioned method.

The above-mentioned technical solution of the present disclosure has at least the following beneficial effects:
In a DCI sending and receiving method, a DCI sending and receiving apparatus, a network side device, and a terminal of the embodiments of the present disclosure, for a terminal in the RRC idle state, the network side device carries wake-up information and/or paging advance indication information through at least one information field of the first DCI, so that it can more flexibly distinguish whether the terminal needs to be woken up and a state of related information to be monitored after being woken up, and the terminal receiving the first DCI can perform energy-saving operations according to the above-mentioned information field of the first DCI, thereby reducing terminal power consumption.

### BRIEF DESCRIPTION OF THE DRAWINGS

In order to more clearly explain the technical solution of embodiments in the present disclosure, the drawings that need to be used in the description of the embodiments of the present disclosure will be briefly introduced below, obviously, the drawings in the following description are only some embodiments of the present disclosure, and those ordinarily skilled in the art can obtain other drawings according to these drawings without making any creative effort.
FIG. 1 shows a block diagram of a radio communication system applied to an embodiment of the present disclosure;
FIG. 2 shows a first schematic view of steps of a DCI sending method provided by an embodiment of the present disclosure;
FIG. 3 shows a schematic structural view of a first DCI in Example 1 provided by an embodiment of the present disclosure;
FIG. 4 shows a schematic structural view of the first DCI in Example 2 provided by an embodiment of the present disclosure;
FIG. 5 shows a schematic structural view of the first DCI in Example 3 provided by an embodiment of the present disclosure;
FIG. 6 shows a schematic structural view of the first DCI in Example 4 provided by an embodiment of the present disclosure;
FIG. 7 shows a schematic structural view of the first DCI in Example 5 provided by an embodiment of the present disclosure;
FIG. 8 shows a first schematic view of steps of a DCI receiving method provided by an embodiment of the present disclosure;
FIG. 9 shows a second schematic view of steps of the DCI sending method provided by an embodiment of the present disclosure;
FIG. 10 shows a second schematic view of steps of the DCI receiving method provided by an embodiment of the present disclosure;
FIG. 11 shows a first schematic structural view of a network side device provided by an embodiment of the present disclosure;
FIG. 12 shows a first schematic structural view of a DCI sending apparatus provided by an embodiment of the present disclosure;
FIG. 13 shows a first schematic structural view of a terminal provided by an embodiment of the present disclosure;
FIG. 14 shows a first schematic structural view of a DCI receiving apparatus provided by an embodiment of the present disclosure;
FIG. 15 shows a second schematic structural view of the network side device provided by an embodiment of the present disclosure;
FIG. 16 shows a second schematic structural view of the DCI sending apparatus provided by an embodiment of the present disclosure;
FIG. 17 shows a second schematic structural view of the terminal provided by an embodiment of the present disclosure; and
FIG. 18 shows a second schematic structural view of the DCI receiving apparatus provided by an embodiment of the present disclosure.

### DETAILED DESCRIPTION

The technical solutions in the embodiments of the present disclosure will be described clearly and completely below with reference with drawings in the embodiments of the present disclosure, obviously, the described embodiments are part of the embodiments in the present disclosure, rather than all of embodiments. Based on the embodiments in the present disclosure, all other embodiments obtained by those ordinarily skilled in the art without making creative efforts belong to the protection scope of the present disclosure.

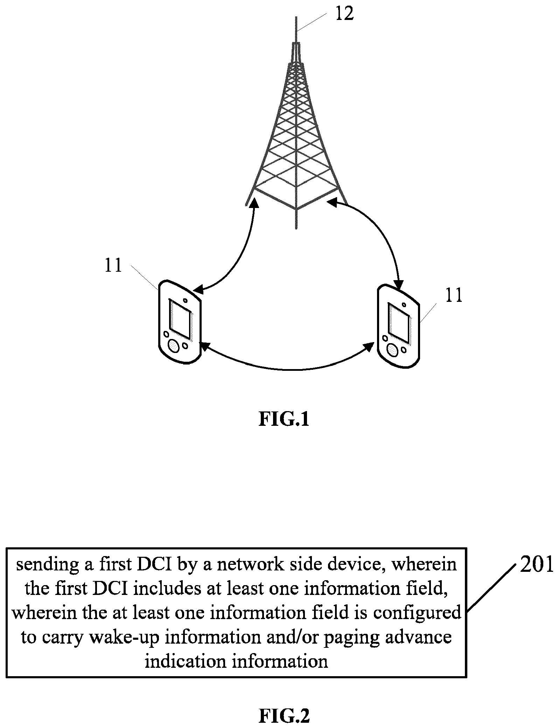

FIG. 1 shows a block diagram of a radio communication system applied to an embodiment of the present disclosure. The radio communication system includes a terminal 11 and a network side device 12, wherein the terminal 11 may also be called a terminal device or a user terminal (User Equipment, UE). It should be noted that, the embodiment of the present disclosure does not limit the specific type of the terminal 11. The network side device 12 may be a base station or a core network. It should be noted that in the embodiments of the present disclosure, only the base station in the NR system is taken as an example, but the specific type of the base station is not limited.

The term "and/or" in the embodiments of the present disclosure describes the association relationship of associated objects, indicating that there may be three relationships, for example, A and/or B, which may mean these three situations: A exists alone, A and B exist simultaneously, and B exists alone. The character "/" generally indicates that the contextual objects are an "or" relationship.

The term "plurality" in the embodiments of the present disclosure refers to two or more, and other quantifiers are similar.

The technical solutions in the embodiments of the present disclosure will be described clearly and completely below with reference with drawings in the embodiments of the present disclosure, obviously, the described embodiments are part of the embodiments in the present disclosure, rather than all of embodiments. Based on the embodiments in the present disclosure, all other embodiments obtained by those ordinarily skilled in the art without making creative efforts belong to the protection scope of the present disclosure.

The technical solutions provided by the embodiments of the present disclosure can be applied to various systems, especially 5G systems. For example, the applicable system may be global system of mobile communication (global system of mobile communication, GSM) system, code division multiple access (code division multiple access, CDMA) system, wideband code division multiple access (Wideband Code Division Multiple Access, WCDMA) general packet radio service (general packet radio service, GPRS) system, long term evolution (long term evolution, LTE) system, LTE frequency division duplex (frequency division duplex, FDD) system, LTE time division duplex (time division duplex, TDD) system, Long term evolution advanced (LTE-A) system, universal mobile telecommunication system (universal mobile telecommunication system, UMTS), worldwide interoperability for microwave access (worldwide interoperability for microwave access, WiMAX) system, 5G new radio (New Radio, NR) system, etc. These various systems include terminal devices and network devices. The system may also include a core network part, such as an evolved packet system (Evloved Packet System, EPS), a 5G system (5GS), and the like.

The terminal device involved in the embodiments of the present disclosure may be a device that provides voice and/or data connectivity to users, a handheld device with a radio connection function, or other processing devices connected to a radio modem. In different systems, the name of the terminal device may be different. For example, in a 5G system, the terminal device may be called user equipment (User Equipment, UE). Radio terminal device can communicate with one or more core networks (Core Network, CN) via a radio access network (Radio Access Network, RAN), the radio terminal device may be a mobile terminal device, such as a mobile phone (or called a "cellular "telephones) and computers with mobile terminal device, such as portable, pocket, hand-held, computer built-in or vehicle-mounted mobile apparatus, which exchange language and/or data with the radio access network. For example, Personal Communication Service (Personal Communication Service, PCS) phones, cordless phones, Session Initiated Protocol (Session Initiated Protocol, SIP) phones, Wireless Local Loop (Wireless Local Loop, WLL) stations, Personal Digital Assistant (Personal Digital Assistant, PDA) and other devices. Radio terminal device may also be called system, subscriber unit (subscriber unit), subscriber station (subscriber station), mobile station (mobile station), mobile station (mobile), remote station (remote station), access point (access point), remote terminal device (remote terminal), access terminal device (access terminal), user terminal device (user terminal), user agent (user agent), and user device (user device), which are not limited in the embodiments of the present disclosure.

The network device involved in the embodiments of the present disclosure may be a base station, and the base station may include multiple cells that provide services for terminals. Depending on the different specific application scenarios, the base station can also be called an access point, or can be a device in the access network that communicates with the radio terminal device through one or more sectors on the air interface, or other names. Network devices can be used to interchange received over-the-air frames with Internet Protocol (IP) packets and act as routers between radio terminal devices and the rest part of the access network, wherein the rest part of the access network can include the Internet Protocol (IP) communication network. Network devices may also coordinate attribute management for the air interface. For example, the network device involved in this embodiment of the present disclosure may be a network device (Base Transceiver Station, BTS) in Global System for Mobile communications (Global System for Mobile communications, GSM) or Code Division Multiple Access (Code Division Multiple Access, CDMA), or a network device (NodeB) in Wide-band Code Division Multiple Access (Wide-band Code Division Multiple Access, WCDMA), or may be an evolved network device (evolutional Node B, eNB or e-NodeB) in a long term evolution (long term evolution, LTE) system, a 5G base station (gNB) in a 5G network architecture (next generation system), or a home evolved Node B (Home evolved Node B, HeNB), relay node (relay node), home base station (femto), pico base station (pico), etc., which are not limited in this embodiment of the present disclosure. In some network structures, a network device may include a centralized unit (centralized unit, CU) node and a distributed unit (distributed unit, DU) node, and the centralized unit and the distributed unit may also be arranged geographically separately.

One or more antennas can be used between network devices and terminal devices for Multi Input Multi Output (Multi Input Multi Output, MIMO) transmission, and MIMO transmission may be Single User MIMO (Single User MIMO, SU-MIMO) or Multiple User MIMO (Multiple User MIMO, MU-MIMO). According to the shape and quantity of root antenna combinations, MIMO transmission may be 2D-MIMO, 3D-MIMO, FD-MIMO, or massive-MIMO, or diversity transmission, precoding transmission, or beamforming transmission, etc.

As shown in FIG. 2, an embodiment of the present disclosure provides a method for sending downlink control information DCI, the method includes:
step 201, sending a first DCI by a network side device, wherein the first DCI includes at least one information field, wherein the at least one information field is configured to carry wake-up information and/or paging advance indication information; specifically, at least one information field is configured to carry wake-up information and/or paging advance indication information of a terminal in an RRC idle state;
wherein the wake-up information (for example, the wake-up information is a wake up signal (Wake up signal, WUS)) is configured to indicate whether the terminal needs to be woken up; the paging advance indication information is configured to indicate a state of related information to be monitored after the terminal is woken up. Optionally, one information field corresponds to at least 1 bit; in other words, the foregoing information field may also be called a bit field, that is, the first DCI includes at least one bit field.

Optionally, the wake-up information is specifically configured to indicate whether the terminal needs to receive paging (Paging) on the subsequent corresponding PO (Paging Occasion, paging occasion), or the wake-up information is specifically configured to indicate whether the terminal needs to be woken up to perform the monitoring of physical downlink control channel (Physical Downlink Control Channel, PDCCH) during a subsequent discontinuous reception (Discontinuous reception, DRX) activation period.

It should be noted that the above-mentioned first DCI may be in an existing DCI format or a newly defined DCI format. For example, DCI format 1_0, or DCI format 2_6.

For example, in a case that the first DCI is in an existing DCI format, for DCI format 2_6, in RRC idle state, DCI format 2_6 is configured through PDCCH configuration or PDCCH configuration system information blocks (System Information Blocks, SIB), and DCI format 2_6 is configured as Type0 CSS (Common Search Space, public search space) at this time; when entering the RRC connection state, the terminal-specific DCI format2_6 is configured through PDCCH-config, that is, DCI format2_6 is configured as Type3 CSS or terminal-specific search space (UE-specific SS) at this time.

It should be further noted that, if the first DCI is in an existing DCI format, the first DCI also carries a power-saving identity. For example, scrambling using a paging signal radio network tempory identity (Power Saving-Radio Network Tempory Identity, PS-RNTI) or a paging advance indication radio network tempory identity (Permanent Equipment Identifier-Radio Network Tempory Identity, PEI-RNTI), or indicating using other power-saving identities. Specifically, at least one of the following may be included:
configuring DCIs with different bit lengths, that is, configuring the DCI for carrying paging indication related information as the first bit length, and configuring the DCI for carrying other information as the second bit length;
configuring the specific bit field of DCI for carrying paging indication related information as a special value, for example, configuring the time domain resource allocation (Time Domain Resource Allocation, TDRA) of DCI for carrying paging indication related information as all zero bits or all 1 bits, configuring the frequency domain resource allocation (Frequency Domain Resource Allocation, FDRA) of DCI for carrying paging indication related information as all zero bits or all 1 bits;
using a dedicated DCI format;
using a dedicated search space.

In the embodiments of the present disclosure, the terminal does not need to monitor DCIs of different lengths by using existing DCI for carrying paging indication related information, thereby reducing the monitoring complexity of the terminal and reducing the power consumption of the terminal.

As an optional embodiment, the at least one information field includes: a first information field and a second information field; correspondingly, an embodiment of the present disclosure includes the following modes of carrying wake-up information and/or paging advance indication information:
mode 1, the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information; in other words, the first information field carries cell-level information, and the second information field carries terminal-level and/or terminal group-level information;
mode 2, the first information field is configured to carry wake-up information of N1 terminal groups, and the second information field is configured to carry terminal group-level paging advance indication information corresponding to each terminal group in the first information field; N1 is an integer greater than or equal to 1; in other words, the first information field carries wake-up information corresponding to N1 terminal groups, and the second information field carries a state of related information to be monitored after the terminal is woken up corresponding to the first information field;
mode 3, the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1; in other words, the first information field is cell-level wake-up information and wake-up information corresponding to N2 terminal groups, and the second information field carries a state of related information to be monitored after the terminal is woken up corresponding to the first information field;
mode 4, the first information field is configured to carry cell-level wake-up information and wake-up information of N3 terminal groups, and the second information field is configured to carry a plurality of groups of paging advance indication information, and each of groups of paging advance indication information includes: a state of information to be monitored after the terminal is woken up corresponding to cell level and N3 terminal groups; N3 is an integer greater than or equal to 1; in other words, the first information field is wake-up information, and the second information field is the paging advance indication information except the wake-up information.

As another optional embodiment, the at least one information field includes: N4 third information fields; correspondingly, the embodiment of the present disclosure also includes the following mode of carrying wake-up information and/or paging advance indication information:
mode 5, the third information field is configured to carry wake-up information of a terminal group and/or terminal group-level paging advance indication information of the terminal group; N4 is an integer greater than or equal to 1.

In an embodiment of the present disclosure, for a terminal in an RRC idle state, the network side device carries wake-up information and/or paging advance indication information through at least one information field of the first DCI, wherein the wake-up information and/or paging advance indication information is divided into cell-level information and terminal grouping-level information, so that it can more flexibly distinguish whether the terminal needs to be woken up and the state of related information to be monitored after being woken up, and the terminal receiving the first DCI can perform energy-saving operations according to the above-mentioned information field of the first DCI, thereby reducing terminal power consumption. For example, if the information received by the terminal indicates the transmission of the Earthquake and Tsunami Warning System (Earthquake and Tsunami Warning System, ETWS), the terminal only needs to receive PDCCH of paging message indication information or paging message, and does not need to buffer and receive the PDCCH, thereby further reducing the power consumption of the terminal.

Optionally, in at least one embodiment of the present disclosure, the cell-level paging advance indication information is configured to indicate at least one of the following:
whether earthquake and tsunami warning system ETWS is sent;
whether commercial mobile alert system (Commercial Mobile Alert System, CMAS) is sent;
whether system message update indication is sent;
system message update type;
whether a short message is sent;
whether target reference signal (the target reference signal may also be called the reference signal for time-frequency channel tracking) is sent;
beam information of the target reference signal (the target reference signal may also be called the reference signal for time-frequency channel tracking);
whether a system information block of configuration target parameter signal (the target reference signal may also be called the reference signal for time-frequency channel tracking) is updated;
whether to wake up to monitor physical downlink control channel PDCCH of a paging;
whether to wake up to monitor physical downlink shared channel (Physical Downlink Shared Channel, PDSCH) of the paging.

The target reference signal includes at least one of the following:
tracking reference signal (Tracking Reference Signal, TRS);
channel state indicator-reference signal (Channel State Indicator-Reference Signal, CSI-RS);
synchronization signal block (synchronization signal block, SSB).

Optionally, in at least one embodiment of the present disclosure, the terminal-level paging indication information and/or terminal group-level paging indication information is configured to indicate at least one of the following:
whether the terminal and/or terminal group is woken up to monitor physical downlink control channel PDCCH of the paging;
whether the terminal and/or terminal group is woken up to monitor physical downlink shared channel PDSCH of the paging;
whether system message update indication corresponding to the terminal and/or terminal group is sent;
system message update type corresponding to the terminal and/or terminal group;
whether a short message is sent;
whether target reference signal (the target reference signal may also be called the reference signal for time-frequency channel tracking) corresponding to the terminal and/or terminal group is sent;
beam information of the target reference signal (the target reference signal may also be called the reference signal for time-frequency channel tracking) corresponding to the terminal and/or terminal group;
whether a system information block of configuration target parameter signal (the target reference signal may also be called the reference signal for time-frequency channel tracking) is updated.

The target reference signal includes at least one of the following:
tracking reference signal (Tracking Reference Signal, TRS);
channel state indicator-reference signal (Channel State Indicator-Reference Signal, CSI-RS);
synchronization signal block (synchronization signal block, SSB).

In order to more clearly illustrate the DCI sending method provided by the embodiment of the present disclosure, several examples are used for description below.

### Example 1, Corresponding Method 1

The network side device configures a first DCI, wherein the first DCI includes a first information field and a second information field,
wherein the first information field is configured to carry cell-level information, which includes at least one of the following: whether ETWS is sent, whether CMAS is sent, whether system message update indication is sent, type of system message update, whether a short message is sent, whether target reference signal is sent, beam information of the target reference signal.

The second information field is configured to carry terminal level and/or terminal group-level information. The terminal level and/or terminal group-level information is configured to indicate whether the terminal and/or the terminal group is woken up to monitor the DCI of the paging, which includes at least one of the following: indicating whether the terminal group and/or the terminal needs to be woken up to monitor the PDSCH, indicating whether the terminal group and/or the terminal needs to be woken up to monitor the PDCCH, indicating whether the system message update indication of the terminal group and/or terminal is sent, indicating system message update type of the terminal group and/or terminal, indicating whether a short message is sent, indicating whether the target reference signal is sent, indicating the beam information of the target reference signal.

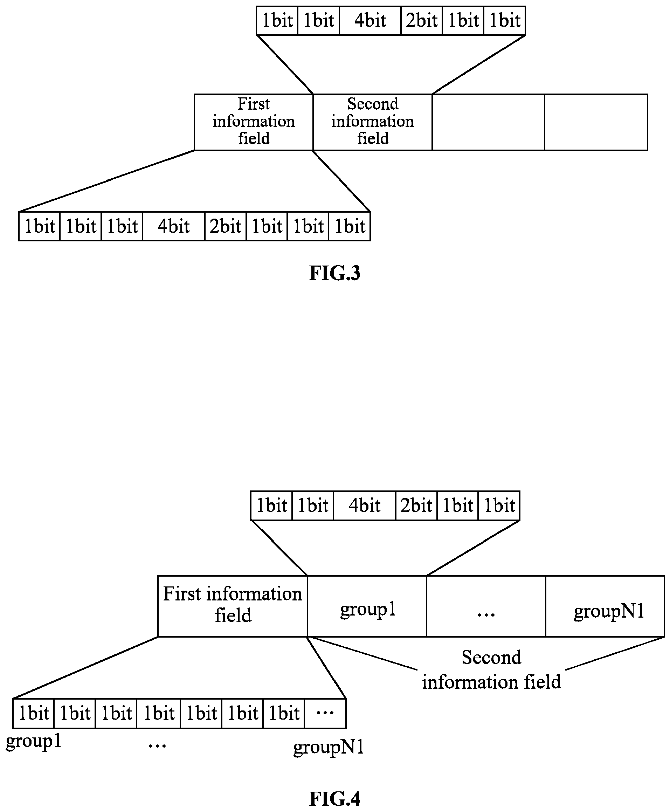

As shown in FIG. 3, the first information field is configured as cell-level information, and the second information field is configured as terminal group-level information.

The cell-level information may include at least one of the following: 1) 1 bit indicating whether ETWS is sent; 2) 1 bit indicating whether CMAS is sent; 3) 1 bit indicating whether system message update indication is sent; 4) 4 bits indicating which system message is updated; 5 ) 2 bits indicating whether a short message is sent; 6) 1 bit indicating whether the cell-specific target reference signal is sent; 7) 1 bit indicating the beam information of the cell-specific target reference signal.

Further, 1 bit indicates whether the SIB configured by TRS is updated. Therefore, the terminal can identify the SIBx configured by TRS without reading from the SIB1, thereby saving the power consumption of the terminal. At this time, if only the SIBx configured by TRS changes, the bit corresponding to the SI update indication may be configured as 0, and the bit corresponding to the SIBx configured by TRS may be configured as 1.

Terminal group-level information may include at least one of the following: 1) 1 bit indicating whether the terminal of this group needs to monitor PDSCH; 2) 1 bit indicating whether the system message update indication of this group is sent; 3) 4 bits indicating which system message of this group needs to be updated; 4) 2bit indicating whether the short message needs to be updated; 5) 1bit indicating whether the group common TRS of this group is sent; 8) 1bit indicating the beam information of the target reference signal.

The terminal can not receive paging in the scenario wherein there is no paging sending but only system message update, and realizes the sleep operation between the wake-up information and the paging occasion PO by reading the cell-level ETWS and system message update indication, so as to achieve energy-saving effect; on the other hand, the indication sent by the ETWS can enable the terminal to decode SIB6, SIB7, and SIB8 immediately to avoid decoding started from SIB1, thereby saving power consumption, and reducing the receiving delay of decoding ETWS.

### Example 2, corresponding mode 2

The network side device configures a first DCI, wherein the first DCI includes a first information field and a second information field,
wherein the first information field is configured to indicate whether the terminal group needs to receive a paging message on a subsequent corresponding PO. Each group uses 1 bit to identify whether the terminal group needs to be woken up, and then perform the monitoring of PDCCH of the subsequent paging message.

The second information field is configured to indicate whether related information of the terminal group is sent. The second information field includes at least one of the following: whether ETWS is sent, whether CMAS is sent, whether system message update indication is sent, type of system message update, whether a short message is sent, whether target reference signal is sent, beam information of target reference signal.

As shown in FIG. 4, the information of the first information field may include: whether N1 terminal groups (UE group) need to receive the identity of paging message on the subsequent corresponding PO, 1 bit is configured to indicate whether the group needs to be woken up to receive Paging DCI.

The second information field indicates the state of related information of N1 UE groups, which may include that: 1) 1 bit indicates whether the UE of this group is woken up to monitor PDSCH; 2) 1 bit indicates whether the system message update indication of this group is sent; 3) 4 bits indicate which system message of this group needs to be updated; 4) 2 bits is used to indicate whether a short message needs to be updated; 5) 1bit indicates whether the group-specific TRS of this group is sent; 6) 1bit indicates the beam information of the target reference signal.

In this example, the terminal obtains information about whether the terminal is woken up by reading the first information field, and then reads the system message update indication type in the second information field. If the first information field indicates that the DCI of the paging message does not need to be monitored, the terminal does not need to read the content of the second information field. Further, if the first information field indicates the terminal needs to be woken up, the second information field can further indicate that ETWS and system message update indication can not receive paging in the scenario wherein there is no paging sending but only system message update, and realizes the sleep operation between the wake-up information and the paging occasion PO, thereby achieving energy-saving effect; on the other hand, indication sent by ETWS can enable the terminal to decode SIB6, SIB7, and SIB8 immediately to avoid decoding started from SIB1, thereby saving power consumption, and reducing the receiving delay of decoding ETWS.

### Example 3, corresponding mode 3

The network side device configures a first DCI, wherein the first DCI includes a first information field and a second information field,
wherein the first information field is configured to indicate whether the cell level and the terminal group level need wake-up information. The cell level uses 1 bit to identify whether to wake up to monitor the PDCCH of the subsequent paging message, and each group uses 1 bit to identify whether to wake up to monitor the PDCCH of the subsequent paging message.

The second information field is configured to indicate whether the related information corresponding to the cell level and/or the related information corresponding to the terminal group is sent. The second information field includes at least one of the following: whether ETWS is sent, whether CMAS is sent, whether system message update indication is sent, type of system message update, whether a short message is sent, whether target reference signal is sent, beam information of the target reference signal.

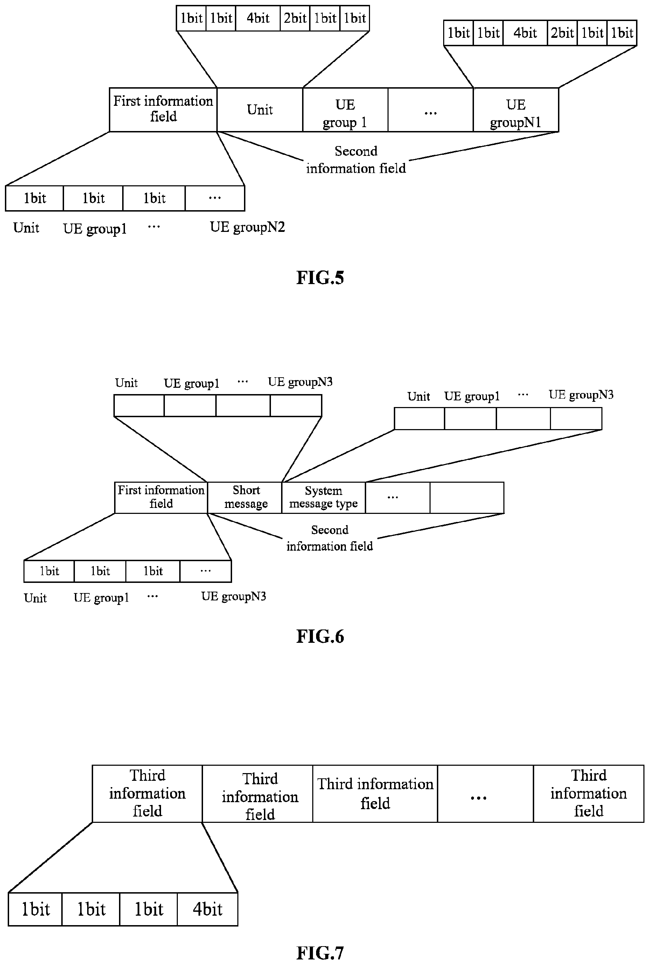

As shown in FIG. 5, the first information field may include: identity of whether one cell level is woken up, and identity of whether N2 UE groups are woken up; 1 bit is configured to indicate whether to wake up to receive the Paging DCI.

The second information field indicates a state of related information of cell-level and a state of related information of N2 UE groups, which may include that: 1) 1 bit indicates whether UE of this group is woken up to monitor PDSCH; 2) 1 bit indicates whether the system message update indication of this group is sent; 3) 4bit indicates which system message of this group needs to be updated; 4) 2bit is configured to indicate whether the short message needs to be updated; 5) 1bit indicates whether the group-specific target reference signal of this group is sent; 6) 1 bit indicates the beam information of the target reference signal.

In this example, the terminal obtains information about whether the terminal is woken up by reading the first information field, if all terminal groups at the paging location do not need to perform the monitoring of DCI of subsequent paging message, the terminal group does not need to read the subsequent second information field; otherwise, read the second information field. If the second information field includes: system message update indication type, for example, ETWS and system message update indication can not receive paging in the scenario wherein there is no paging sending but only system message update, realizes the sleep operation between the wake-up information and the paging occasion PO, thereby achieving the energy-saving effect; on the other hand, the indication sent by ETWS can enable the terminal to decode SIB6, SIB7, SIB8 immediately to avoid decoding started from SIB1, thereby saving power consumption, and reducing the receiving delay of decoding ETWS.

### Example 4, corresponding method 4

The network side device configures a first DCI, wherein the first DCI includes a first information field and a second information field;
wherein the first information field is configured to indicate whether the cell level and the terminal group level need wake-up information. The cell level uses 1 bit to identify whether to wake up to monitor the PDCCH of the subsequent paging message, and each group uses 1 bit to identify whether to wake up to monitor the PDCCH of the subsequent paging message.

The second information field is configured to carry a plurality of paging advance indication information, and each of groups of paging advance indication information includes: a state of information to be monitored after the terminal is woken up corresponding to the cell level and N3 terminal groups; for example, the information to be monitored after the terminal is woken up includes ETWS, CMAS, system message update indication, type of system message update, short message, target reference signal, and beam information of the target reference signal.

As shown in FIG. 6, the first information field may include: identity of whether one cell level is woken up, and identity of whether N2 UE groups are woken up; 1 bit is configured to indicate whether to wake up to receive the Paging DCI.

The second information field includes: a group of paging advance indication information corresponding to a short message, that is, whether the cell-level short message is sent, whether respective short messages corresponding to N3 terminal groups are sent; a group of paging advance indication information corresponding to the system message type, that is, the cell-level system message type, and respective system message types corresponding to N3 terminal groups.

In this example, the terminal can obtain the wake-up information indicated by the fixed bit field by reading the information of the fixed bit field, and each information field may include the wake-up information of the information of the region for the cell level and/or terminal group level, for example, ETWS and system message update indication can not receive paging in the scenario wherein there is no paging sending but only system message update, realizes the sleep operation between the wake-up information and the paging occasion PO, thereby achieving the energy-saving effect; on the other hand, the indication sent by ETWS can enable the terminal to decode SIB6, SIB7, SIB8 immediately to avoid decoding started from SIB1, thereby saving power consumption, and reducing the receiving delay of decoding ETWS.

### Example 5, corresponding method 5

The network side device is configured with the first DCI, and the first DCI includes N4 third information fields; N4 third information fields are divided into N4 terminals and/or terminal groups, and each terminal and/or terminal group is configured with a plurality of bits.

The specific bit format of the plurality of bits includes at least one of the following, whether ETWS is sent, whether CMAS is sent, whether the system message update indication is sent, the type of system message update, whether a short message is sent, whether the target reference signal is sent, beam information of the target reference signal.

As shown in FIG. 7, the third information includes at least one of the following: 1) 1 bit, configured to indicate whether the group needs to be woken up to receive Paging DCI; 2) 1 bit, configured to indicate whether the channel time-frequency tracking reference signal is sent; 3) 1bit: configured to indicate whether ETWS is sent; 4) 1bit: configured to indicate whether the system message update indication is sent; 5) 4bit, configured to indicate the type of system message update; 6) 1bit, configured to indicate the beam information of reference signal of the time-frequency channel tracking.

In this example, the existing DCI format can be reused without increasing the complexity of blind detection of DCI by the terminal. The wake-up content of all information of this group can be obtained by monitoring the information of terminal group at a specific location. Similarly, for example, ETWS and system message update indication can not receive paging in the scenario wherein there is no paging sending but only system message update, realizes the sleep operation between the wake-up information and the paging occasion PO, thereby achieving the energy-saving effect; on the other hand, the indication sent by ETWS can enable the terminal to decode SIB6, SIB7, SIB8 immediately to avoid decoding started from SIB1, thereby saving power consumption, and reducing the receiving delay of decoding ETWS.

To sum up, in the embodiments of the present disclosure, for a terminal in the RRC idle state, the network side device carries wake-up information and/or paging advance indication information through at least one information field of the first DCI, so that it can more flexibly distinguish whether the terminal needs to be woken up and a state of related information to be monitored after being woken up, and the terminal receiving the first DCI can perform energy-saving operation according to the above-mentioned information field of the first DCI, thereby reducing terminal power consumption.

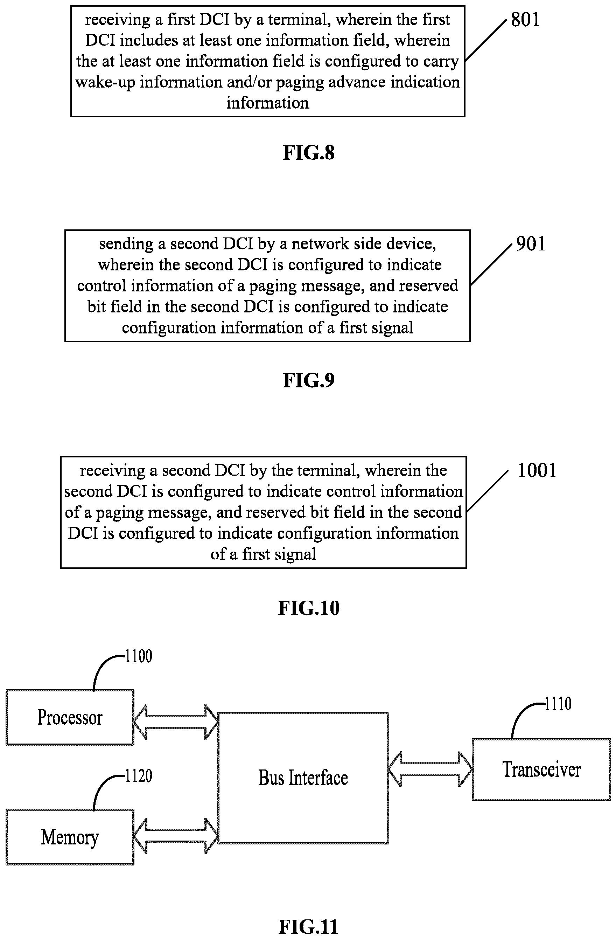

As shown in FIG. 8, an embodiment of the present disclosure also provides a method for receiving downlink control information DCI, which includes:
step 801, receiving, by a terminal, a first DCI, wherein the first DCI includes at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up. Optionally, one information field corresponds to at least 1 bit; in other words, the foregoing information field may also be called a bit field, that is, the first DCI includes at least one bit field.

Optionally, the wake-up information is specifically configured to indicate whether the terminal needs to receive paging (Paging) on a subsequent corresponding paging occasion (Paging Occasion, PO), or the wake-up information is specifically configured to indicate whether the terminal needs to be woken up to monitor the PDCCH during a subsequent discontinuous reception (Discontinuous reception, DRX) activation period.

As an optional embodiment, the at least one information field includes: a first information field and a second information field; correspondingly, embodiments of the present disclosure include the following modes of carrying wake-up information and/or paging advance indication information:
mode 1, the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information; in other words, the first information field carries cell-level information, and the second information field carries terminal-level and/or terminal group-level information;
mode 2, the first information field is configured to carry wake-up information of N1 terminal groups, and the second information field is configured to carry terminal group-level paging advance indication information corresponding to each terminal group in the first information field; N1 is an integer greater than or equal to 1; in other words, the first information field carries wake-up information corresponding to N1 terminal groups, and the second information field carries a state of related information to be monitored after the terminal is woken up corresponding to the first information field;
mode 3, the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1; in other words, the first information field is cell-level wake-up information and wake-up information corresponding to N2 terminal groups, and the second information field carries a state of relevant information to be monitored after the terminal is woken up corresponding to the first information field;
mode 4, the first information field is configured to carry cell-level wake-up information and wake-up information of N3 terminal groups, and the second information field is configured to carry a plurality of groups of paging advance indication information, and each of groups of paging advance indication information includes: a state of information to be monitored after the terminal is woken up corresponding to cell level and N3 terminal groups; N3 is an integer greater than or equal to 1; in other words, the first information field is wake-up information, and the second information field is the paging advance indication information except the wake-up information.

As another optional embodiment, the at least one information field includes: N4 third information fields; correspondingly, embodiments of the present disclosure also include the following mode of carrying wake-up information and/or paging advance indication information:
mode 5, the third information field is configured to carry wake-up information of a terminal group and/or terminal group-level paging advance indication information of the terminal group; N4 is an integer greater than or equal to 1.

Optionally, in at least one embodiment of the present disclosure, the cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

Optionally, in at least one embodiment of the present disclosure, the terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

Optionally, the target reference signal includes at least one of the following:
tracking reference signal TRS;
channel state indicator-reference signal CSI-RS;
synchronization signal block SSB.

In an embodiment of the present disclosure, for a terminal in the RRC idle state, the network side device carries wake-up information and/or paging advance indication information through at least one information field of the first DCI, wherein the wake-up information and/or paging advance indication information is divided into cell-level information and terminal group-level information, so that it can more flexibly distinguish whether the terminal needs to be woken up and a state of related information to be monitored after being woken up, and the terminal receiving the first DCI can perform energy-saving operations according to the above-mentioned information field of the first DCI, thereby reducing terminal power consumption. For example, if the information received by the terminal indicates the transmission of ETWS, the terminal only needs to receive the paging message indication information or the PDCCH of paging message, and does not need to buffer and receive the PDCCH, thereby further reducing the power consumption of the terminal.

As shown in FIG. 9, an embodiment of the present disclosure also provides a method for sending downlink control information DCI, wherein the method includes:
step 901, sending a second DCI by a network side device, wherein the second DCI is configured to indicate control information of a paging message, and reserved bit field in the second DCI is configured to indicate configuration information of a first signal;
the configuration information of the first signal includes at least one of the following:
   information of dedicated system information block SIB of the first signal;
   an indication of whether the dedicated SIB of the first signal is updated.
   wherein the first signal includes at least one of the following:
   tracking reference signal TRS;
   channel state indicator-reference signal CSI-RS;
   synchronization signal block SSB;
   paging advance indication signal PEI.

Optionally, the control information of the paging message includes: short message indication, and scheduling information of the paging message. That is, the second DCI includes: short message indication, scheduling information of the paging message, and reserved bit field.

In at least one embodiment of the present disclosure, the reserved bit field is configured to indicate at least one of the configuration information of the first signal, that is, the information of the dedicated SIB of the first signal, and an indication of whether the dedicated SIB of the first signal is sent and updated.

The TRS includes at least one of the following: being configured for channel time-frequency tracking, and being configured for paging message advance indication information;
the CSI-RS includes at least one of the following: being configured for channel time-frequency tracking, channel state update, and radio resource management (Radio Resource Management, RRM) measurement;
the SSB includes at least one of the following: being configured for coarse synchronization, fine synchronization, channel time-frequency tracking, and RRM measurement;
the PEI is configured to indicate the paging message advance indication information.

In an embodiment of the present disclosure, the configuration information of the first signal is carried in the reserved bit field of the second DCI of the configuration paging message, and the terminal may not need to demodulate and decode the periodic SIB 1, or, further, demodulate and encode other SIB messages through SIB1, so that the terminal can obtain the information of whether the first signal is updated faster, thereby reducing the power consumption of the terminal.

As shown in FIG. 10, an embodiment of the present disclosure also provides a method for receiving downlink control information DCI, which includes:
step 1001, receiving, by the terminal, a second DCI, wherein the second DCI is configured to indicate control information of a paging message, and reserved bit field in the second DCI is configured to indicate configuration information of a first signal;
the configuration information of the first signal includes at least one of the following:
   information of dedicated system information block SIB of the first signal;
   an indication of whether the dedicated SIB of the first signal is updated.
   wherein the first signal includes at least one of the following:
   tracking reference signal TRS;
   channel state indicator-reference signal CSI-RS;
   synchronization signal block SSB;
   paging advance indication signal.

Optionally, the control information of the paging message includes: short message indication, and scheduling information of the paging message. That is, the second DCI includes: short message indication, scheduling information of the paging message, and reserved bit field.

In at least one embodiment of the present disclosure, the reserved bit field is configured to indicate at least one of the configuration information of the first signal, that is, the information of the dedicated SIB of the first signal, and an indication of whether the dedicated SIB of the first signal is sent and updated.

In an embodiment of the present disclosure, the configuration information of the first signal is carried in the reserved bit field of the second DCI of the configuration paging message, and the terminal may not need to demodulate and decode the periodic SIB 1, or, further, demodulate and encode other SIB messages through SIB1, so that the terminal can obtain the information of whether the first signal is updated faster, thereby reducing the power consumption of the terminal.

An embodiment of the present disclosure also provides a DCI sending apparatus and a DCI receiving apparatus. Since the principles of solving problems of the sending apparatus and the receiving apparatus are similar to those of the DCI sending method and the DCI receiving method in the embodiments of the present disclosure, therefore, the implementation of the sending apparatus and the receiving apparatus may refer to the implementation of the method, and the repetition will not be described again.

As shown in FIG. 11, an embodiment of the present disclosure also provides a network side device, which includes a memory 1120, a transceiver 1110, and a processor 1100, wherein the memory 1120 is configured to store computer program; the transceiver 1110 is configured to send and receive data under control of the processor 1100; the processor 1100 is configured to read the computer program in the memory 1120 and perform the following operations of:
sending a first DCI, wherein the first DCI includes at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

As an optional embodiment, the at least one information field includes: a first information field and a second information field; where
the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information;
or,
the first information field is configured to carry wake-up information of N1 terminal groups, and the second information field is configured to carry terminal group-level paging advance indication information corresponding to each terminal group in the first information field; N1 is an integer greater than or equal to 1;
or,
the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1;
or,
the first information field is configured to carry cell-level wake-up information and wake-up information of N3 terminal groups, and the second information field is configured to carry a plurality of groups of paging advance indication information, and each of groups of paging advance indication information includes: a state of information to be monitored after the terminal is woken up corresponding to cell level and N3 terminal groups; N3 is an integer greater than or equal to 1.

As an optional embodiment, the at least one information field includes: N4 third information fields; where
the third information field is configured to carry wake-up information of a terminal group and/or terminal group-level paging advance indication information of the terminal group; N4 is an integer greater than or equal to 1.

As an optional embodiment, the cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

As an optional embodiment, the terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

As an optional embodiment, the target reference signal includes at least one of the following:
tracking reference signal TRS;
channel state indicator-reference signal CSI-RS;
synchronization signal block SSB.

In FIG. 11, the bus architecture may include any quantity of interconnected buses and bridges, specifically one or more processors represented by the processor 1100 and various circuits of the memory represented by the memory 1120 are linked together. The bus architecture can also link together various other circuits such as peripherals, voltage regulators, and power management circuits, etc., which are well known in the art and therefore will not be further described herein. The bus interface provides the interface. Transceiver 1110 may be a plurality of elements, including a transmitter and a receiver, which provides a unit for communicating with various other apparatuses over transmission media, these transmission media includes wireless channels, wired channels, optical cables, and other transmission media. The processor 1100 is responsible for managing the bus architecture and general processing, and the memory 1120 can store data used by the processor 1100 when performing operations.

The processor 1100 may be a central processor (CPU), an application specific integrated circuit (Application Specific Integrated Circuit, ASIC), a field programmable gate array (Field-Programmable Gate Array, FPGA) or a complex programmable logic device (Complex Programmable Logic Device, CPLD), the processor can also adopt a multi-core architecture.

In an embodiment of the present disclosure, for a terminal in the RRC idle state, the network side device carries wake-up information and/or paging advance indication information through at least one information field of the first DCI, wherein the wake-up information and/or paging advance indication information is divided into cell-level information and terminal group-level information, so that it can more flexibly distinguish whether the terminal needs to be woken up and a state of related information to be monitored after being woken up, and the terminal receiving the first DCI can perform energy-saving operations according to the above-mentioned information field of the first DCI, thereby reducing terminal power consumption.

It should be noted here that the above-mentioned network-side device provided by the embodiments of the present disclosure can implement all the method steps implemented by the above-mentioned method embodiments, and can achieve the same technical effect. Parts and beneficial effects in this embodiment that are the same as those in the method embodiment will not be described in detail here.

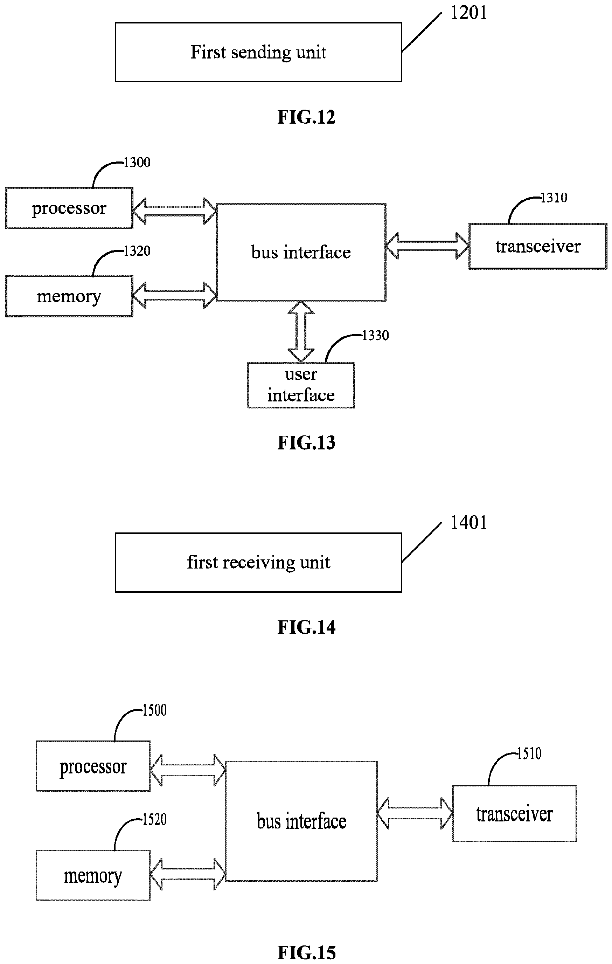

As shown in FIG. 12, an embodiment of the present disclosure also provides a sending apparatus for downlink control information DCI, applied to a network side device, which includes:
a first sending unit 1201, configured to send a first DCI, wherein the first DCI includes at least one information field, wherein the at least one information field is configured to carry wake-up information and/or paging advance indication information;
wherein the wake-up information is configured to indicate whether a terminal needs to be woken up; the paging advance indication information is configured to indicate a state of related information to be monitored after the terminal is woken up.

As an optional embodiment, the at least one information field includes: a first information field and a second information field; where
the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information;
or,
the first information field is configured to carry wake-up information of N1 terminal groups, and the second information field is configured to carry terminal group-level paging advance indication information corresponding to each terminal group in the first information field; N1 is an integer greater than or equal to 1;
or,
the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1;
or,
the first information field is configured to carry cell-level wake-up information and wake-up information of N3 terminal groups, and the second information field is configured to carry a plurality of groups of paging advance indication information, and each of groups of paging advance indication information includes: a state of information to be monitored after the terminal is woken up corresponding to cell level and N3 terminal groups; N3 is an integer greater than or equal to 1.

As an optional embodiment, the at least one information field includes: N4 third information fields; where
the third information field is configured to carry wake-up information of a terminal group and/or terminal group-level paging advance indication information of the terminal group; N4 is an integer greater than or equal to 1.

As an optional embodiment, the cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

As an optional embodiment, the terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

As an optional embodiment, the target reference signal includes at least one of the following:
tracking reference signal TRS;
channel state indicator-reference signal CSI-RS;
synchronization signal block SSB.

In an embodiment of the present disclosure, for a terminal in the RRC idle state, the network side device carries wake-up information and/or paging advance indication information through at least one information field of the first DCI, wherein the wake-up information and/or paging advance indication information is divided into cell-level information and terminal group-level information, so that it can more flexibly distinguish whether the terminal needs to be woken up and a state of related information to be monitored after being woken up, and the terminal receiving the first DCI can perform energy-saving operations according to the above-mentioned information field of the first DCI, thereby reducing terminal power consumption.

It should be noted here that the above-mentioned apparatus provided by the embodiments of the present disclosure can implement all the method steps implemented by the above-mentioned method embodiments, and can achieve the same technical effect. Parts and beneficial effects in this embodiment that are the same as those in the method embodiment will not be described in detail here.

As shown in FIG. 13, an embodiment of the present disclosure also provides a terminal, which includes a memory 1320, a transceiver 1310, and a processor 1300, wherein the memory 1320 is configured to store computer program; the transceiver 1310 is configured to send and receive data under the control of the processor 1300; the processor 1300 is configured to read the computer program in the memory 1320 and perform the following operations of:
receiving a first DCI, wherein the first DCI includes at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

As an optional embodiment, the at least one information field includes: a first information field and a second information field, where
the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information;
or,
the first information field is configured to carry wake-up information of N1 terminal groups, and the second information field is configured to carry terminal group-level paging advance indication information corresponding to each terminal group in the first information field; N1 is an integer greater than or equal to 1;
or,
the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1;
or,
the first information field is configured to carry cell-level wake-up information and wake-up information of N3 terminal groups, and the second information field is configured to carry a plurality of groups of paging advance indication information, and each of groups of paging advance indication information includes: a state of information to be monitored after the terminal is woken up corresponding to cell level and N3 terminal groups; N3 is an integer greater than or equal to 1.

As an optional embodiment, the at least one information field includes: N4 third information fields; where
the third information field is configured to carry wake-up information of a terminal group and/or terminal group-level paging advance indication information of the terminal group; N4 is an integer greater than or equal to 1.

As an optional embodiment, the cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

As an optional embodiment, the terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

As an optional embodiment, the target reference signal includes at least one of the following:
tracking reference signal TRS;
channel state indicator-reference signal CSI-RS;
synchronization signal block SSB.

In FIG. 13, the bus architecture may include any quantity of interconnected buses and bridges, specifically one or more processors represented by the processor 1300 and various circuits of the memory represented by the memory 1320 are linked together. The bus architecture can also link together various other circuits such as peripherals, voltage regulators, and power management circuits, etc., which are well known in the art and therefore will not be further described herein. The bus interface provides the interface. Transceiver 1310 may be a plurality of elements, including a transmitter and a receiver, which provides a unit for communicating with various other apparatuses over transmission media, these transmission media includes wireless channels, wired channels, fiber optic cables and other transmission media. For different user devices, the user interface 1330 may also be an interface capable of connecting externally and internally to required devices, and the connected devices include but not limited to keypads, displays, speakers, microphones, joysticks, and the like.

The processor 1300 is responsible for managing the bus architecture and general processing, and the memory 1320 can store data used by the processor 1300 when performing operations.

Optionally, the processor 1300 may be a CPU (Central Processing Device), ASIC (Application Specific Integrated Circuit, Application Specific Integrated Circuit), FPGA (Field-Programmable Gate Array, Field Programmable Gate Array) or CPLD (Complex Programmable Logic Device, complex programmable logic device), the processor can also adopt a multi-core architecture.

The processor is used to execute any one of the methods provided by the embodiments of the present disclosure according to the obtained executable instructions by calling the computer program stored in the memory. The processor and memory may also be arranged physically separately.

In an embodiment of the present disclosure, for a terminal in the RRC idle state, the network side device carries wake-up information and/or paging advance indication information through at least one information field of the first DCI, wherein the wake-up information and/or paging advance indication information is divided into cell-level information and terminal group-level information, so that it can more flexibly distinguish whether the terminal needs to be woken up and a state of related information to be monitored after being woken up, and the terminal receiving the first DCI can perform energy-saving operations according to the above-mentioned information field of the first DCI, thereby reducing terminal power consumption.

It should be noted here that the above-mentioned terminal provided by the embodiments of the present disclosure can implement all the method steps implemented by the above-mentioned method embodiments, and can achieve the same technical effect. Parts and beneficial effects in this embodiment that are the same as those in the method embodiment will not be described in detail here.

As shown in FIG. 14, an embodiment of the present disclosure also provides a receiving apparatus for downlink control information DCI, applied to a terminal, which includes:
a first receiving unit 1401, configured to receive a first DCI, wherein the first DCI includes at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

As an optional embodiment, the at least one information field includes: a first information filed and a second information field, where
the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information;
or,
the first information field is configured to carry wake-up information of N1 terminal groups, and the second information field is configured to carry terminal group-level paging advance indication information corresponding to each terminal group in the first information field; N1 is an integer greater than or equal to 1;
or,
the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1;
or,
the first information field is configured to carry cell-level wake-up information and wake-up information of N3 terminal groups, and the second information field is configured to carry a plurality of groups of paging advance indication information, and each of groups of paging advance indication information includes: a state of information to be monitored after the terminal is woken up corresponding to cell level and N3 terminal groups; N3 is an integer greater than or equal to 1.

As an optional embodiment, the at least one information field includes: N4 third information fields; where
the third information field is configured to carry wake-up information of a terminal group and/or terminal group-level paging advance indication information of the terminal group; N4 is an integer greater than or equal to 1.

As an optional embodiment, the cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

As an optional embodiment, the terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

As an optional embodiment, the target reference signal includes at least one of the following:
tracking reference signal TRS;
channel state indicator-reference signal CSI-RS;
synchronization signal block SSB.

In an embodiment of the present disclosure, for a terminal in the RRC idle state, the network side device carries wake-up information and/or paging advance indication information through at least one information field of the first DCI, wherein the wake-up information and/or paging advance indication information is divided into cell-level information and terminal group-level information, so that it can more flexibly distinguish whether the terminal needs to be woken up and a state of related information to be monitored after being woken up, and the terminal receiving the first DCI can perform energy-saving operations according to the above-mentioned information field of the first DCI, thereby reducing terminal power consumption.

It should be noted here that the above-mentioned apparatus provided by the embodiments of the present disclosure can implement all the method steps implemented by the above-mentioned method embodiments, and can achieve the same technical effect. Parts and beneficial effects in this embodiment that are the same as those in the method embodiment will not be described in detail here.

As shown in FIG. 15, an embodiment of the present disclosure also provides a network side device, which includes a memory 1520, a transceiver 1510, and a processor 1500, wherein the memory 1520 is configured to store computer program; the transceiver 1510 is configured to send and receive data under the control of the processor 1500; the processor 1500 is configured to read the computer program in the memory 1520 and perform the following operations of:
sending a second DCI, wherein the second DCI is configured to indicate control information of a paging message, and reserved bit field in the second DCI is configured to indicate configuration information of a first signal;
the configuration information of the first signal includes at least one of the following:
   information of dedicated system information block SIB of the first signal;
   an indication of whether the dedicated SIB of the first signal is updated.

As an optional embodiment, the first signal includes at least one of the following:
tracking reference signal TRS;
channel state indicator-reference signal CSI-RS;
synchronization signal block SSB;
paging advance indication signal.

In FIG. 15, the bus architecture may include any quantity of interconnected buses and bridges, specifically one or more processors represented by the processor 1500 and various circuits of the memory represented by the memory 1520 are linked together. The bus architecture can also link together various other circuits such as peripherals, voltage regulators, and power management circuits, etc., which are well known in the art and therefore will not be further described herein. The bus interface provides the interface. Transceiver 1510 may be a plurality of elements, including a transmitter and a receiver, which provide a unit for communicating with various other apparatuses over transmission media, these transmission media includes wireless channels, wired channels, optical cables, and other transmission media. The processor 1500 is responsible for managing the bus architecture and general processing, and the memory 1520 can store data used by the processor 1500 when performing operations.

The processor 1500 may be a central processor (CPU), an application specific integrated circuit (Application Specific Integrated Circuit, ASIC), a field programmable gate array (Field-Programmable Gate Array, FPGA) or a complex programmable logic device (Complex Programmable Logic Device , CPLD), the processor can also adopt a multi-core architecture.

In an embodiment of the present disclosure, the configuration information of the first signal is carried in the reserved bit field of the second DCI of the configuration paging message, and the terminal may not need to demodulate and decode the periodic SIB 1, or, further, demodulate and encode other SIB messages through SIB1, so that the terminal can obtain the information of whether the first signal is updated faster, thereby reducing the power consumption of the terminal.

It should be noted here that the above-mentioned network side device provided by the embodiments of the present disclosure can implement all the method steps implemented by the above-mentioned method embodiments, and can achieve the same technical effect. Parts and beneficial effects in this embodiment that are the same as those in the method embodiment will not be described in detail here.

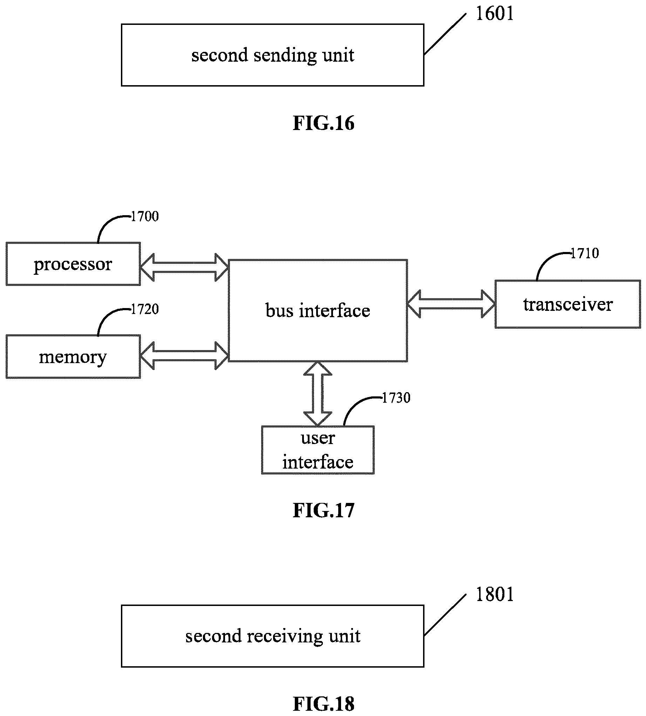

As shown in FIG. 16, an embodiment of the present disclosure also provides a sending apparatus for downlink control information DCI, applied to a network side device, which includes:
a second sending unit 1601, configured to send a second DCI, wherein the second DCI is configured to indicate control information of a paging message, and reserved bit field in the second DCI is configured to indicate configuration information of a first signal;
the configuration information of the first signal includes at least one of the following:
   information of dedicated system information block SIB of the first signal;
   an indication of whether the dedicated SIB of the first signal is updated.

As an optional embodiment, the first signal includes at least one of the following:
tracking reference signal TRS;
channel state indicator-reference signal CSI-RS;
synchronization signal block SSB;
paging advance indication signal.

In an embodiment of the present disclosure, the configuration information of the first signal is carried in the reserved bit field of the second DCI of the configuration paging message, and the terminal may not need to demodulate and decode the periodic SIB1, or, further, demodulate and encode other SIB messages through SIB1, so that the terminal can obtain the information of whether the first signal is updated faster, thereby reducing the power consumption of the terminal.

It should be noted here that the above-mentioned apparatus provided by the embodiments of the present disclosure can implement all the method steps implemented by the above-mentioned method embodiments, and can achieve the same technical effect. Parts and beneficial effects in this embodiment that are the same as those in the method embodiment will not be described in detail here.

As shown in FIG. 17, an embodiment of the present disclosure also provides a terminal, which includes a memory 1720, a transceiver 1710, and a processor 1700, wherein the memory 1720 is configured to store computer program; the transceiver 1710 is configured to send and receive data under the control of the processor 1700; the processor 1700 is configured to read the computer program in the memory 1720 and perform the following operations of:
receiving a second DCI, wherein the second DCI is configured to indicate control information of a paging message, and reserved bit field in the second DCI is configured to indicate configuration information of a first signal;
the configuration information of the first signal includes at least one of the following:
   information of dedicated system information block SIB of the first signal;
   an indication of whether the dedicated SIB of the first signal is updated.

As an optional embodiment, the first signal includes at least one of the following:
tracking reference signal TRS;
channel state indicator-reference signal CSI-RS;
synchronization signal block SSB;
paging advance indication signal.

In FIG. 17, the bus architecture may include any quantity of interconnected buses and bridges, specifically one or more processors represented by the processor 1700 and various circuits of the memory represented by the memory 1720 are linked together. The bus architecture can also link together various other circuits such as peripherals, voltage regulators, and power management circuits, etc., which are well known in the art and therefore will not be further described herein. The bus interface provides the interface. Transceiver 1710 may be a plurality of elements, including a transmitter and a receiver, which provide a unit for communicating with various other apparatuses over transmission media, these transmission media include wireless channels, wired channels, fiber optic cables, other transmission media. For different user devices, the user interface 1730 may also be an interface capable of connecting externally and internally to required devices, and the connected devices include but are not limited to keypads, displays, speakers, microphones, joysticks, and the like.

The processor 1700 is responsible for managing the bus architecture and general processing, and the memory 1720 can store data used by the processor 1700 when performing operations.

Optionally, the processor 1700 may be a CPU (central processor), ASIC (Application Specific Integrated Circuit, application specific integrated circuit), FPGA (Field-Programmable Gate Array, field programmable gate array) or CPLD (Complex Programmable Logic Device, complex programmable logic device), the processor can also adopt a multi-core architecture.

The processor is used to execute any one of the methods provided by the embodiments of the present disclosure according to the obtained executable instructions by calling the computer program stored in the memory. The processor and memory may also be arranged physically separately.

In an embodiment of the present disclosure, the configuration information of the first signal is carried in the reserved bit field of the second DCI of the configuration paging message, and the terminal may not need to demodulate and decode the periodic SIB1, or, further, demodulate and encode other SIB messages through SIB1, so that the terminal can obtain the information of whether the first signal is updated faster, thereby reducing the power consumption of the terminal.

It should be noted here that the above-mentioned terminal provided by the embodiments of the present disclosure can implement all the method steps implemented by the above-mentioned method embodiments, and can achieve the same technical effect. Parts and beneficial effects in this embodiment that are the same as those in the method embodiment will not be described in detail here.

As shown in FIG. 18, an embodiment of the present disclosure also provides a receiving apparatus for downlink control information DCI, applied to a terminal, which includes:
a second receiving unit 1801, configured to receive a second DCI, wherein the second DCI is configured to indicate control information of a paging message, and reserved bit field in the second DCI is configured to indicate configuration information of a first signal;
the configuration information of the first signal includes at least one of the following:
   information of dedicated system information block SIB of the first signal;
   an indication of whether the dedicated SIB of the first signal is updated.

As an optional embodiment, the first signal includes at least one of the following:
tracking reference signal TRS;
channel state indicator-reference signal CSI-RS;
synchronization signal block SSB;
paging advance indication signal.

In an embodiment of the present disclosure, the configuration information of the first signal is carried in the reserved bit field of the second DCI of the configuration paging message, and the terminal may not need to demodulate and decode the periodic SIB 1, or, further, demodulate and encode other SIB messages through SIB1, so that the terminal can obtain the information of whether the first signal is updated faster, thereby reducing the power consumption of the terminal.

It should be noted here that the above-mentioned apparatus provided by the embodiments of the present disclosure can implement all the method steps implemented by the above-mentioned method embodiments, and can achieve the same technical effect. Parts and beneficial effects in this embodiment that are the same as those in the method embodiment will not be described in detail here.

It should be noted that the division of the units in the embodiment of the present disclosure is schematic, and is only a logical function division, and there may be another division manner in actual implementation. In addition, each functional unit in each embodiment of the present disclosure may be integrated into one processing unit, each unit may exist separately physically, or two or more units may be integrated into one unit. The above-mentioned integrated units can be implemented in the form of hardware or in the form of software functional units.

If the integrated unit is realized in the form of a software function unit and sold or used as an independent product, the integrated unit can be stored in a processor-readable storage medium. Based on such an understanding, the essence of the technical solution of the present disclosure or the part that contributes to the related technology or all or part of the technical solution can be embodied in the form of a software product, and the computer software product is stored in a storage medium. Several instructions are included to cause a computer device (which may be a personal computer, a server, or a network device, etc.) or a processor (processor) to execute all or part of the steps of the methods described in the various embodiments of the present disclosure. The aforementioned storage media include: U disk, mobile hard disk, read-only memory (Read-Only Memory, ROM), random access memory (Random Access Memory, RAM), magnetic disk or optical disk and other media that can store program codes..

An embodiment of the present disclosure further provides a processor-readable storage medium, the processor-readable storage medium stores a computer program, and the computer program is used to enable the processor to execute the above-mentioned embodiment of the DCI sending method or an embodiment of a DCI receiving method. The processor-readable storage medium may be any available medium or data storage device that can be accessed by a processor, which includes but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid-state drive (SSD)), etc.

Those skilled in the art should understand that the embodiments of the present disclosure may be provided as methods, systems, or computer program products. Therefore, the present disclosure can take the form of an entirely hardware embodiment, an entirely software embodiment, or an embodiment combining software and hardware aspects. Furthermore, the present disclosure may take the form of a computer program product embodied on one or more computer-usable storage media (including but not limited to magnetic disk storage, optical storage, etc.) having computer-usable program code embodied therein.

The present disclosure is described with reference to flowchart and/or block diagrams of methods, device (systems), and computer program products according to embodiments of the present disclosure. It should be understood that each process and/or block in the flowchart and/or block diagrams, and combinations of process and/or blocks in the flowchart and/or block diagrams can be implemented by computer-executable instructions. These computer-executable instructions can be provided to a general-purpose computer, special-purpose computer, embedded processor, or processor of other programmable data processing device to produce a machine, such that instructions executed by the processor of the computer or other programmable data processing device produce an apparatus for realizing the functions specified in one or more processes of a flowchart and/or one or more blocks of a block diagram.

These processor-executable instructions may also be stored in a processor-readable memory capable of directing a computer or other programmable data processing device to operate in a specific manner, such that the instructions stored in the processor-readable memory produce a manufacturing product including the instruction apparatus, the instruction apparatus realizes the function specified in one or more processes of the flowchart and/or one or more blocks of the block diagram.

These processor-executable instructions can also be loaded onto a computer or other programmable data processing device, which causes a series of operational steps to be performed on the computer or other programmable device to produce a computer-implemented processing, the instructions executed on the computer or other programmable devices thus provide steps for realizing the functions specified in one or more processes of the flowchart and/or one or more blocks of the block diagram.

Those skilled in the art can appreciate that the units and algorithm steps of the examples described in conjunction with the embodiments disclosed herein can be implemented by electronic hardware, or a combination of computer software and electronic hardware. Whether these functions are executed by hardware or software depends on the specific application and design constraints of the technical solution. Skilled artisans may implement the described functionality using different methods for each particular application, but such implementation should not be considered beyond the scope of the present disclosure.

Those skilled in the art can clearly understand that for the convenience and brevity of the description, the specific working process of the above-described system, apparatus and unit can refer to the corresponding process in the foregoing method embodiment, which will not be repeated here.

In the embodiments provided in the present disclosure, it should be understood that the disclosed apparatuses and methods may be implemented in other ways. For example, the apparatus embodiments described above are only illustrative. For example, the division of the units is only a logical function division. In actual implementation, there may be other division methods. For example, multiple units or components can be combined or may be integrated into another system, or some features may be ignored, or not implemented. In another point, the mutual coupling or direct coupling or communication connection shown or discussed may be achieved through some interfaces, and the indirect coupling or communication connection of apparatuses or units may be in electrical, mechanical or other forms.

The units described as separate components may or may not be physically separated, and the components shown as units may or may not be physical units, that is, they may be located in one place, or may be distributed to multiple network units. Part or all of the units can be selected according to actual needs to achieve the purpose of the solution of this embodiment.

In addition, each functional unit in each embodiment of the present disclosure may be integrated into one processing unit, each unit may exist separately physically, or two or more units may be integrated into one unit.

If the functions described above are realized in the form of software function units and sold or used as independent products, the functions can be stored in a computer-readable storage medium. Based on this understanding, the technical solution of the present disclosure is essentially or the part that contributes to the prior art or the part of the technical solution can be embodied in the form of a software product, and the computer software product is stored in a storage medium, several instructions are included to enable a computer device (which may be a personal computer, a server, or a network device, etc.) to execute all or part of the steps of the methods described in various embodiments of the present disclosure. The aforementioned storage medium includes: various media capable of storing program codes such as U disk, mobile hard disk, ROM, RAM, magnetic disk or optical disk.

Those ordinarily skilled in the art can understand that all or part of the processes in the methods of the above embodiments can be realized by controlling related hardware through a computer program, and the program can be stored in a computer-readable storage medium, when the program is executed, it may include the processes of the embodiments of the above-mentioned methods, wherein the storage medium may be a magnetic disk, an optical disk, a read-only memory (Read-Only Memory, ROM) or a random access memory (Random Access Memory, RAM), and the like.

It is obvious that those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A method for sending downlink control information DCI, wherein the method comprises:
sending a first DCI by a network side device, wherein the first DCI comprises at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

2. The method according to claim 1, wherein the at least one information field comprises:
a first information filed and a second information field, wherein
the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information;
or,
the first information field is configured to carry wake-up information of N1 terminal groups, and the second information field is configured to carry terminal group-level paging advance indication information corresponding to each terminal group in the first information field; N1 is an integer greater than or equal to 1;
or,
the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1;
or,
the first information field is configured to carry cell-level wake-up information and wake-up information of N3 terminal groups, and the second information field is configured to carry a plurality of groups of paging advance indication information, and each of groups of paging advance indication information comprises: a state of information to be monitored after the terminal is woken up corresponding to cell level and N3 terminal groups; N3 is an integer greater than or equal to 1.

3. The method according to claim 1, wherein the at least one information field comprises:
N4 third information fields; wherein
each of the third information fields is configured to carry wake-up information of a terminal group and/or terminal group-level paging advance indication information of the terminal group; N4 is an integer greater than or equal to 1.

4. The method according to claim 2, wherein the cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

5. The method according to claim 2 or 3, wherein the terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

6. The method according to claim 4 or 5, wherein the target reference signal comprises at least one of the following:
tracking reference signal TRS;
channel state indicator-reference signal CSI-RS;
synchronization signal block SSB.

7. A method for receiving downlink control information DCI, comprising:
receiving, by a terminal, a first DCI, wherein the first DCI comprises at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

8. The method according to claim 7, wherein the at least one information field comprises:
a first information filed and a second information field, wherein
the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information;
or,
the first information field is configured to carry wake-up information of N1 terminal groups, and the second information field is configured to carry terminal group-level paging advance indication information corresponding to each terminal group in the first information field; N1 is an integer greater than or equal to 1;
or,
the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1;
or,
the first information field is configured to carry cell-level wake-up information and wake-up information of N3 terminal groups, and the second information field is configured to carry a plurality of groups of paging advance indication information, and each of groups of paging advance indication information comprises: a state of information to be monitored after the terminal is woken up corresponding to cell level and N3 terminal groups; N3 is an integer greater than or equal to 1.

9. The method according to claim 7, wherein the at least one information field comprises:
N4 third information fields; wherein
each of the third information fields is configured to carry wake-up information of a terminal group and/or terminal group-level paging advance indication information of the terminal group; N4 is an integer greater than or equal to 1.

10. The method according to claim 8, wherein the cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

11. The method according to claim 8 or 9, wherein the terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

12. The method according to claim 8 or 9, wherein the target reference signal comprises at least one of the following:
tracking reference signal TRS;
channel state indicator-reference signal CSI-RS;
synchronization signal block SSB.

13. A method for sending downlink control information DCI, wherein the method comprises:
sending a second DCI by a network side device, wherein the second DCI is configured to indicate control information of a paging message, and reserved bit field in the second DCI is configured to indicate configuration information of a first signal;
the configuration information of the first signal comprises at least one of the following:
information of dedicated system information block SIB of the first signal;
an indication of whether the dedicated SIB of the first signal is updated.

14. The method according to claim 13, wherein the first signal comprises at least one of the following:
tracking reference signal TRS;
channel state indicator-reference signal CSI-RS;
synchronization signal block SSB;
paging advance indication signal.

15. A method for receiving downlink control information DCI, comprising:
receiving, by the terminal, a second DCI, wherein the second DCI is configured to indicate control information of a paging message, and reserved bit field in the second DCI is configured to indicate configuration information of a first signal;
the configuration information of the first signal comprises at least one of the following:
information of dedicated system information block SIB of the first signal;
an indication of whether the dedicated SIB of the first signal is updated.

16. The method according to claim 15, wherein the first signal comprises at least one of the following:
tracking reference signal TRS;
channel state indicator-reference signal CSI-RS;
synchronization signal block SSB;
paging advance indication signal.

17. A network side device, comprising a memory, a transceiver, and a processor; wherein the memory is configured to store computer program; the transceiver is configured to send and receive data under control of the processor; the processor is configured to read the computer program in the memory and perform the following operations of:
sending a first DCI, wherein the first DCI comprises at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

18. A sending apparatus for downlink control information DCI, applied to a network side device, comprising:
a first sending unit, configured to send a first DCI, wherein the first DCI comprises at least one information field, wherein the at least one information field is configured to carry wake-up information and/or paging advance indication information;
wherein the wake-up information is configured to indicate whether a terminal needs to be woken up; the paging advance indication information is configured to indicate a state of related information to be monitored after the terminal is woken up.

19. The sending apparatus according to claim 18, wherein the at least one information field comprises: a first information filed and a second information field, wherein
the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information;
or,
the first information field is configured to carry wake-up information of N1 terminal groups, and the second information field is configured to carry terminal group-level paging advance indication information corresponding to each terminal group in the first information field; N1 is an integer greater than or equal to 1;
or,
the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1;
or,
the first information field is configured to carry cell-level wake-up information and wake-up information of N3 terminal groups, and the second information field is configured to carry a plurality of groups of paging advance indication information, and each of groups of paging advance indication information comprises: a state of information to be monitored after the terminal is woken up corresponding to cell level and N3 terminal groups; N3 is an integer greater than or equal to 1.

20. The sending apparatus according to claim 18, wherein the at least one information field comprises: N4 third information fields; wherein
each of the third information fields is configured to carry wake-up information of a terminal group and/or terminal group-level paging advance indication information of the terminal group; N4 is an integer greater than or equal to 1.

21. The sending apparatus according to claim 19, wherein the cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

22. The sending apparatus according to claim 19 or 20, wherein the terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

23. The sending apparatus according to claim 21 or 22, wherein the target reference signal comprises at least one of the following:
tracking reference signal TRS;
channel state indicator-reference signal CSI-RS;
synchronization signal block SSB.

24. A terminal, comprising a memory, a transceiver, and a processor; wherein the memory is configured to store computer program; the transceiver is configured to send and receive data under control of the processor; the processor is configured to read the computer program in the memory and perform the following operations of:
receiving a first DCI, wherein the first DCI comprises at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

25. A receiving apparatus for downlink control information DCI, applied to a terminal, comprising:
a first receiving unit, configured to receive a first DCI, wherein the first DCI comprises at least one information field, wherein the at least one information field is configured to carry wake-up information and/or paging advance indication information,
wherein the wake-up information is configured to indicate whether a terminal needs to be woken up; the paging advance indication information is configured to indicate a state of related information to be monitored after the terminal is woken up.

26. The sending apparatus according to claim 25, wherein the at least one information field comprises: a first information filed and a second information field, wherein
the first information field is configured to carry cell-level wake-up information and/or cell-level paging advance indication information, and the second information field is configured to carry at least one of wake-up information of the terminal, wake-up information of a terminal group, terminal-level paging advance indication information, and terminal group-level paging advance indication information;
or,
the first information field is configured to carry wake-up information of N1 terminal groups, and the second information field is configured to carry terminal group-level paging advance indication information corresponding to each terminal group in the first information field; N1 is an integer greater than or equal to 1;
or,
the first information field is configured to carry cell-level wake-up information and wake-up information of N2 terminal groups; the second information field is configured to carry cell-level paging advance indication information and terminal group-level paging advance indication information corresponding to each terminal group in the first information field; N2 is an integer greater than or equal to 1;
or,
the first information field is configured to carry cell-level wake-up information and wake-up information of N3 terminal groups, and the second information field is configured to carry a plurality of groups of paging advance indication information, and each of groups of paging advance indication information comprises: a state of information to be monitored after the terminal is woken up corresponding to cell level and N3 terminal groups; N3 is an integer greater than or equal to 1.

27. The sending apparatus according to claim 25, wherein the at least one information field comprises: N4 third information fields; wherein
each of the third information fields is configured to carry wake-up information of a terminal group and/or terminal group-level paging advance indication information of the terminal group; N4 is an integer greater than or equal to 1.

28. The sending apparatus according to claim 26, wherein the cell-level paging advance indication information is configured to indicate at least one of the following:
whether earthquake and tsunami warning system ETWS is sent;
whether commercial mobile alert system CMAS is sent;
whether system message update indication is sent;
system message update type;
whether a short message is sent;
whether target reference signal is sent;
beam information of the target reference signal;
whether a system information block of configuration target parameter signal is updated;
whether to wake up to monitor physical downlink control channel PDCCH of a paging;
whether to wake up to monitor physical downlink shared channel PDSCH of the paging.

29. The sending apparatus according to claim 26 or 27, wherein the terminal-level paging indication information and/or terminal group-level paging indication information is configured to indicate at least one of the following:
whether the terminal and/or terminal group is woken up to monitor PDCCH of a paging;
whether the terminal and/or terminal group is woken up to monitor PDSCH of the paging;
whether system message update indication corresponding to the terminal and/or terminal group is sent;
system message update type corresponding to the terminal and/or terminal group;
whether a short message is sent;
whether target reference signal corresponding to the terminal and/or terminal group is sent;
beam information of the target reference signal corresponding to the terminal and/or terminal group;
whether a system information block of configuration target parameter signal is updated.

30. The sending apparatus according to claim 28 or 29, wherein the target reference signal comprises at least one of the following:
tracking reference signal TRS;
channel state indicator-reference signal CSI-RS;
synchronization signal block SSB.

31. A network side device, comprising a memory, a transceiver, and a processor; wherein the memory is configured to store computer program; the transceiver is configured to send and receive data under control of the processor; the processor is configured to read the computer program in the memory and perform the following operations of:
sending a second DCI, wherein the second DCI is configured to indicate control information of a paging message, and reserved bit field in the second DCI is configured to indicate configuration information of a first signal;
the configuration information of the first signal comprises at least one of the following:
information of dedicated system information block SIB of the first signal;
an indication of whether the dedicated SIB of the first signal is updated.

32. A sending apparatus for downlink control information DCI, applied to a network side device, comprising:
a second sending unit, configured to send a second DCI, wherein the second DCI is configured to indicate control information of a paging message, and reserved bit field in the second DCI is configured to indicate configuration information of a first signal;
the configuration information of the first signal comprises at least one of the following:
information of dedicated system information block SIB of the first signal;
an indication of whether the dedicated SIB of the first signal is updated.

33. The sending apparatus according to claim 32, wherein the first signal comprises at least one of the following:
tracking reference signal TRS;
channel state indicator-reference signal CSI-RS;
synchronization signal block SSB;
paging advance indication signal.

34. A terminal, comprising a memory, a transceiver, and a processor; wherein the memory is configured to store computer program; the transceiver is configured to send and receive data under control of the processor; the processor is configured to read the computer program in the memory and perform the following operations of:
receiving a second DCI, wherein the second DCI is configured to indicate control information of a paging message, and reserved bit field in the second DCI is configured to indicate configuration information of a first signal;
the configuration information of the first signal comprises at least one of the following:
information of dedicated system information block SIB of the first signal;
an indication of whether the dedicated SIB of the first signal is updated.

35. A receiving apparatus for downlink control information DCI, applied to a terminal, comprising:
a second receiving unit, configured to receive a second DCI, wherein the second DCI is configured to indicate control information of a paging message, and reserved bit field in the second DCI is configured to indicate configuration information of a first signal;
the configuration information of the first signal comprises at least one of the following:
information of dedicated system information block SIB of the first signal;
an indication of whether the dedicated SIB of the first signal is updated.

36. The receiving apparatus according to claim 35, wherein the first signal comprises at least one of the following:
tracking reference signal TRS;
channel state indicator-reference signal CSI-RS;
synchronization signal block SSB;
paging advance indication signal.

37. A processor-readable storage medium, wherein the processor-readable storage medium stores computer program, and the computer program is configured to cause the processor to execute the method according to any one of claims 1 to 6; or, the computer program is configured to cause the processor to execute the method according to any one of claims 7 to 12; or, the computer program is configured to cause the processor to execute the method according to claim 13 or 14; the computer program is configured to cause the processor to execute the method according to claim 15 or 16.
